# EUROPÄISCHE PATENTSCHRIFT

(11) **EP 2 895 289 B1**
(45) Veröffentlichungstag und Bekanntmachung des Hinweises auf die Patenterteilung: **26.02.2020**
(21) Anmeldenummer: 13763043.0
(22) Anmeldetag: 13.09.2013
(51) Int. Cl.: B23D 77/04, B23B 29/034

(54) **WERKZEUG ZUR SPANENDEN BEARBEITUNG VON WERKSTÜCKEN**
TOOL FOR MACHINING WORKPIECES
OUTIL D'USINAGE DE PIÈCES PAR ENLÈVEMENT DE MATIÈRE

(30) Priorität: 17.09.2012 DE 102012018643
(43) Veröffentlichungstag der Anmeldung: 22.07.2015
(73) Patentinhaber: MAPAL Fabrik für Präzisionswerkzeuge Dr. Kress KG, D-73431 Aalen (DE)
(72) Erfinder: KRESS, Dieter, 73431 Aalen (DE)
(74) Vertreter: Kordel, Mattias
(86) Internationale Anmeldenummer: PCT/EP2013/069035
(87) Internationale Veröffentlichungsnummer: WO 2014/041130

(56) Entgegenhaltungen:
- WO-A1-2010/069541
- DE-A1-102007 007 377
- US-A- 4 318 647

## Beschreibung

Die Erfindung betrifft ein Werkzeug zur spanenden Bearbeitung von Bohrungen in Werkstücken gemäß Oberbegriff des Anspruchs 1. Ein solches Werkzeug ist beispielsweise aus der US 4,318,647 bekannt.

Werkzeuge der hier angesprochenen Art sind bekannt, insbesondere Feinbearbeitungswerkzeuge wie Reibahlen und dergleichen. Bei der Bearbeitung von Bohrungen in Werkstücken wird eine Relativdrehbewegung zwischen Werkzeug und Werkstück realisiert, um Späne von der Bohrungsoberfläche abzutragen. In der Regel wird das Werkzeug in Rotation versetzt und in Richtung seiner Drehachse gegenüber einer Bohrung im Werkstück verlagert. Das Werkzeug weist mindestens eine geometrisch definierte Schneide auf, von der ein Bereich, die Hauptschneide, in Richtung der Vorschubbewegung des Werkzeugs geneigt ist. An die Hauptschneide schließt sich die Nebenschneide an, die in der Regel entgegengesetzt zur Vorschubrichtung abfällt, wodurch eine Verjüngung realisiert wird. Bei der Einstellung derartiger Werkzeuge muss sowohl der Bearbeitungsdurchmesser des Werkzeugs justiert werden, aber auch die Verjüngung. Es hat sich herausgestellt, dass bei der Justierung des Durchmessers sich häufig die Verjüngung ändert, und umgekehrt der gewünschte Durchmesser nicht eingehalten ist, wenn die Verjüngung eingestellt wird. Um diesen Nachteil zu vermeiden, wird bei bekannten Werkzeugen über eine Seitenfläche eines die mindestens eine geometrisch bestimmte Schneide aufweisenden Schneidkörpers eine Führungsfläche geschaffen, die mit einer entsprechenden Anlagefläche im Grundkörper des Werkzeugs korrespondiert. Es sind dabei spezielle Schneidkörper erforderlich, bei denen die Anzahl der verfügbaren Schneiden reduziert ist. Bekannt ist es auch, Schneidkörper der hier angesprochenen Art in auch als Kassetten bezeichneten Aufnahmen unterzubringen, auf welche die Justierkräfte zur Realisierung des gewünschten Durchmessers beziehungsweise der bestimmten Verjüngung einwirken. Dabei ergibt sich der Nachteil, dass bei Kassetten, die um einen Punkt schwenken, sich bei der Einstellung des Bearbeitungsdurchmessers des Werkzeugs die Verjüngung der mindestens einen Schneide verändert. Es gibt auch Kassetten mit zwei Einstellkeilen, deren Einstellung kompliziert und zeitintensiv ist.

Aufgabe der Erfindung ist es daher, ein Werkzeug zur spanenden Bearbeitung von Bohrungen in Werkstücken zu schaffen, welches die hier genannten Nachteile vermeidet.

Zur Lösung dieser Aufgabe wird ein Werkzeug der oben genannten Art realisiert, welches die in Anspruch 1 aufgeführten Merkmale aufweist. Das insbesondere der Feinbearbeitung von Bohrungen dienende Werkzeug, das insbesondere als Reibahle ausgelegt ist, weist einen Grundkörper, eine Schneideinrichtung, eine Spannvorrichtung sowie eine Justiereinrichtung auf. Sie ist außerdem mit einer Führungseinrichtung versehen, die dazu dient, bei der Einstellung der Schneideinrichtung entlang einer gegenüber dem Grundkörper des Werkzeugs radial verlaufenden gedachten Linie diese exakt zu führen, sodass eine Änderung der gewünschten und voreingestellten Verjüngung nicht stattfindet. Das Werkzeug ist so gemacht, dass die Führungseinrichtung ein einziges Führungselement und/oder eine einzige Führungsaufnahme aufweist, wobei das Führungselement und die Führungsaufnahme zusammenwirken. Das Führungselement weist eine langgestreckte Erhebung und die Führungsaufnahme eine langgestreckte Vertiefung auf, sodass eine optimale Führung der Schneideinrichtung des Werkzeugs bei der Einstellung des Bearbeitungsdurchmessers gewährleistet ist.

Besonders bevorzugt wird ein Ausführungsbeispiel des Werkzeugs, bei dem sich das Führungselement und/oder die Führungsaufnahme über einen Bereich der Breite der Schneideinrichtung und/oder einer Anlagefläche des Grundkörpers erstreckt, gegen welche die Schneideinrichtung mittels der Spannvorrichtung angepresst wird. Dadurch, dass sich das Führungselement beziehungsweise die Führungsaufnahme über einen Bereich der Breite, vorzugsweise über die gesamte Breite erstrecken, ergeben sich besonders exakte Führungskräfte, die ein Verschwenken der Schneideinrichtung während der Einstellung des Bearbeitungsdurchmessers verhindern.

Besonders bevorzugt wird ein Ausführungsbeispiel des Werkzeugs, bei dem das Führungselement einen in den Grundkörper des Werkzeugs oder in die Schneideinrichtung eingesetzten Stift umfasst, dessen Längsachse sich senkrecht zur Mittelachse des Grundkörpers des Werkzeugs erstreckt. Eine derartige Realisierung des Führungselements ist relativ einfach und kostengünstig durchführbar.

Bevorzugt wird ein Ausführungsbeispiel des Werkzeugs, bei dem das Führungselement und/oder die Führungsaufnahme zwei in einem Abstand zueinander angeordnete Führungsbereiche aufweist, die sich zumindest bis zum Rand der Schneideinrichtung beziehungsweise der Auflagefläche im Grundkörper des Werkzeugs erstrecken. Dadurch kann eine besonders exakte Führung der Schneideinrichtung realisiert werden.

Besonders bevorzugt wird außerdem ein Ausführungsbeispiel des Werkzeugs, bei dem die Schneideinrichtung mindestens eine in einem Abstand zum Führungselement oder zur Führungsaufnahme angeordnete Stützfläche aufweist. Die Schneideinrichtung, die sich auf der Anlagefläche im Grundkörper des Werkzeugs abstützt, wird auf diese Weise sehr exakt am Werkzeug gehalten, sodass eingestellte Bearbeitungsdurchmesser und auch eine vorgewählte Verjüngung derart genau eingehalten werden, dass die Oberfläche der bearbeiteten Bohrung sich durch eine hohe Oberflächegüte und sehr genaue Maßhaltigkeit auszeichnet.

Erfindungsgemäß weist die Schneideinrichtung eine Grundfläche auf, wobei im Bereich dieser Grundfläche eine Drei-Punkt-Anlage am Grundkörper des Werkzeugs realisiert wird: Die Schneideinrichtung stützt sich über zwei Führungsbereiche der Führungseinrichtung und über eine Stützfläche an dem Grundkörper ab, sodass ein ungewolltes Verkippen der Schneideinrichtung mit sehr hoher Sicherheit vermieden wird.

Besonders bevorzugt wird außerdem ein Ausführungsbeispiel des Werkzeugs, bei welchem eine Drei-Punkt-Anlage über die beiden Führungsbereiche und über eine dritte Anlagefläche realisiert wird, die im Bereich einer Seitenfläche der Schneideinrichtung liegt. Hier greift die Justiereinrichtung an der Schneideinrichtung an. Diese Drei-Punkt-Anlage stellt sicher, dass auch bezüglich der Justiereinrichtung ein ungewolltes Verkippen der Schneideinrichtung mit hoher Sicherheit vermieden wird, sodass die Einstellung des Werkzeugs sehr exakt ist.

Besonders bevorzugt wird weiterhin ein Ausführungsbeispiel des Werkzeugs, bei dem die Schneideinrichtung eine auch als Kassette bezeichnete Aufnahme umfasst, in der eine die mindestens eine geometrisch bestimmte Schneide aufweisende Messerplatte aufgenommen ist. Dabei ist vorgesehen, dass das Führungselement oder die Führungsaufnahme an einer Grundfläche der Aufnahme der Schneideinrichtung realisiert ist. Durch die Aufteilung der Schneideinrichtung in Messerplatte und Aufnahme ergibt sich der Vorteil, dass bei einem Bruch der Messerplatte die Wahrscheinlichkeit, dass der Grundkörper des Werkzeugs beschädigt wird, sehr weit reduziert wird. Vielmehr ist sichergestellt, dass allenfalls die Kassette in diesem Fall Schaden nimmt, die dann einfach und kostengünstig austauschbar ist. Ein weiterer Vorteil der Aufteilung des Schneidelements in Aufnahme und separate Messerplatte besteht darin, dass auf speziell ausgebildete Messerplatten, die auch als Sonderschneiden bezeichnet werden, verzichtet werden kann. Diese zeichnen sich dadurch aus, dass ihre Seitenflächen so ausgebildet sind, dass Justiereinrichtungen dort eingreifen können. Damit gehen bei derartigen Messerplatten Bereiche verloren, die mit Schneidkanten versehen werden können. Bei dem hier vorgestellten Ausführungsbeispiel ist es vielmehr möglich, übliche Messerplatten in die Kassetten so einzusetzen, dass sich eine gewünschte Verjüngung gibt. Dabei ist es eben nicht erforderlich, dass die Messerplatten selbst Anlageflächen für Justiereinrichtungen bieten.

Weitere Ausgestaltungen ergeben sich aus den Unteransprüchen.

Die Erfindung wird im Folgenden anhand der Zeichnung näher erläutert. Es zeigen:
- Figur 1: eine perspektivische Ansicht eines Werkzeugs zur spanenden Bearbeitung von Bohrungen in Werkstücken;
- Figur 2: eine stark vergrößerte perspektivische Ansicht des Werkzeugs gemäß Figur 1, allerdings mit demontierter Schneideinrichtung;
- Figur 3: eine erste Prinzipskizze zur Verdeutlichung des Zusammenspiels von Elementen des in Figur 1 dargestellten Werkzeugs;
- Figur 4: eine zweite Prinzipskizze zur Verdeutlichung des Zusammenspiels von Elementen des in Figur 1 dargestellten Werkzeugs;
- Figur 5: eine perspektivische Unteransicht einer Aufnahme der Schneideinrichtung des in Figur 1 dargestellten Werkzeugs;
- Figur 6: eine dritte Prinzipskizze zur Verdeutlichung des Zusammenspiels von Elementen des Werkzeugs gemäß Figur 1 mit unverspannter Schneideinrichtung; und
- Figur 7: eine vierte Prinzipskizze zur Verdeutlichung des Zusammenspiels von Elementen des Werkzeugs gemäß Figur 1 mit verspannter Schneideinrichtung.

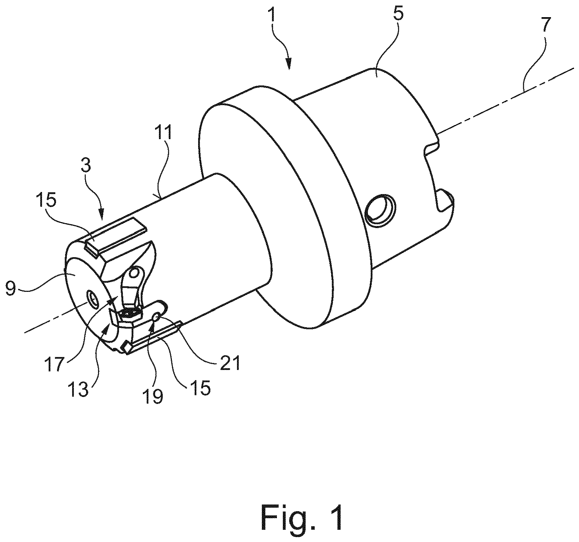

Figur 1 gibt ein Werkzeug 1 wieder, insbesondere ein Feinbohrwerkzeug, bevorzugt eine Reibahle. Das Werkzeug 1 weist einen Werkzeugkopf 3 und einen Schaft 5 auf, der hier als Hohlschaft ausgebildet ist und der Befestigung des Werkzeugs 1 in einer Werkzeugmaschine, einem Adapter, Zwischenstück oder dergleichen dient. Ein Hohlschaft der hier dargestellten Art, ebenso die Verspannung des Werkzeugs sind bekannt, sodass hier nicht näher darauf eingegangen wird. Über den Schaft 5 wird in der Regel ein Drehmoment in das Werkzeug 1 eingeleitet, sodass es in Rotation versetzt wird, um die Bohrung eines Werkstücks zu bearbeiten. Das Werkzeug 1 dreht sich dabei um seine Mittelachse 7.

Der Werkzeugkopf 3 weist einen Grundkörper 9 mit einer Umfangsfläche 11 auf, in die mindestens eine Schneideinrichtung 13 und wenigstens ein Führungsteil 15 eingesetzt ist. In der Regel werden mehrere derartige, auch als Führungsleiste bezeichnete Führungsteile in den Grundkörper 9 eingesetzt, welche die bei der Bearbeitung eines Werkstücks über die Schneideinrichtung 13 in das Werkzeug 1 eingeleiteten Kräfte abfangen und das Werkzeug 1 exakt in der bearbeiteten Bohrung führen.

Der Grundaufbau eines hier dargestellten Werkzeugs beziehungsweise einer Reibahle ist bekannt, sodass hier nicht näher darauf eingegangen wird.

Die Schneideinrichtung 13 weist mindestens eine geometrisch bestimmte Schneide auf, die der spanenden Bearbeitung der Bohrungsoberfläche dient. Die Schneideinrichtung 13 wird mittels einer Spannvorrichtung 17 im Grundkörper 9 des Werkzeugs 1 festgespannt.

Mithilfe einer Justiereinrichtung, die in Figur 1 nicht sichtbar ist, jedoch im Folgenden noch näher erläutert wird, wird die Schneideinrichtung 13 innerhalb des Grundkörpers 9 des Werkzeugs 1 verlagert, und zwar senkrecht zu dessen Mittelachse 7, um den Bearbeitungsdurchmesser des Werkzeugs 1 auf ein gewünschtes Maß einzustellen.

Das hier dargestellte Werkzeug 1 weist eine Führungseinrichtung 19 auf, die ein Führungselement 21 umfasst und dazu dient, die Schneieinrichtung 13 bei einer Justierung des Bearbeitungsdurchmessers des Werkzeugs 1 zu führen, damit die Schneideinrichtung 13 in einer exakt vorgegebenen Relativdrehposition zum Grundkörper 9 des Werkzeugs 1 verbleibt, während der Durchmesser eingestellt wird.

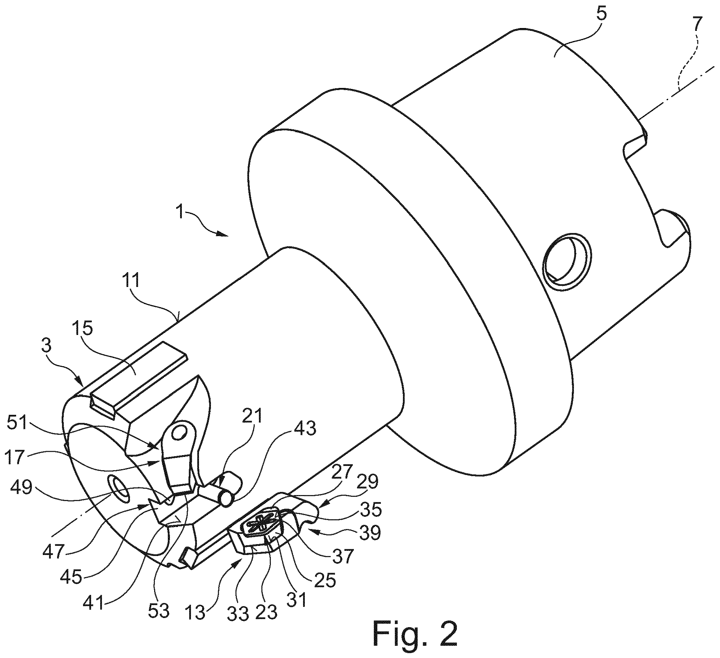

Figur 2 zeigt das Werkzeug 1 in starker Vergrößerung. Gleiche und funktionsgleiche Teile sind mit identischen Bezugsziffern versehen, sodass insofern auf die Beschreibung zu Figur 1 verwiesen wird.

Bei der Darstellung gemäß Figur 2 wurde die Schneideinrichtung 13 aus ihrer in Figur 1 wiedergegebenen Montageposition entfernt, sodass insofern hier eine Explosionsdarstellung bezüglich dieses Details gegeben ist.

In dieser vergrößerten Darstellung ist erkennbar, dass die Schneideinrichtung 13 eine geometrisch bestimmte Schneide 23 aufweist. Diese dient dazu, Späne von einer Bohrungswandung abzutragen.

Grundsätzlich kann die Schneideinrichtung 13 aus einem Stück bestehen und die Schneide 23 aufweisen. Bei einem Verschleiß der Schneide 23 muss dann die komplette Schneideinrichtung 13 ausgetauscht werden.

Besonders bevorzugt ist daher vorgesehen, dass die Schneideinrichtung 13 zweiteilig ausgebildet ist und eine Messerplatte 25 aufweist, die in einer Ausnehmung 27 untergebracht ist, welche in einer Aufnahme 29 realisiert ist. Bei dem hier dargestellten Ausführungsbeispiel ist die Messerplatte sechseckig ausgebildet und liegt mit ihrer Unterseite 31 auf dem Boden 33 der Ausnehmung 27 auf. In ihrer Oberseite ist mindestens eine Spann-Nut 37 vorgesehen. Bei der hier dargestellten sechseckigen Messerplatte 25 sind drei sternförmig angeordnete Spann-Nuten 37 vorgesehen, wie dies bei derartigen Messerplatten üblich ist. Die Kontur der Ausnehmung 27 ist so gewählt, dass die Messerplatte 25 verdrehsicher in der Aufnahme 29 gehalten ist und an zumindest zwei Stützflächen, die mit entsprechenden Seitenflächen der Messerplatte 25 zusammenwirken, sicher abgestützt ist.

Aus Figur 2 wird deutlich, dass die Führungseinrichtung 19 ein langgestrecktes Führungselement 21 aufweist, außerdem eine Führungsaufnahme 39, die mit dem Führungselement 21 zusammenwirkt. Die Anordnung des Führungselements 21 und der Führungsaufnahme 39 kann sehr wohl auch vertauscht sein, das heißt, das Führungselement 21 kann an der Schneideinrichtung 13 und die Führungsaufnahme 39 an dem Grundkörper 9 des Werkzeugs 1 vorgesehen sein.

Im Folgenden wird davon ausgegangen, dass - wie dargestellt - das Führungselement 21 am Grundkörper 9 und die Führungsaufnahme 39 an der Schneideinrichtung 13 vorgesehen ist.

Das Führungselement 21 ist hier in eine Anlagefläche 41 eingesetzt, vorzugsweise eingepresst, und zwar in eine Nut 43 im Grundkörper 9. Entscheidend ist allerdings lediglich, dass die Führungseinrichtung 19 einerseits ein langgestrecktes Führungselement und andererseits eine langgestreckte Führungsaufnahme aufweist. Das Führungselement kann beispielsweise durch eine Erhebung auf der Anlagefläche 41 realisiert werden, die durch Schleifen, Fräsen oder Lasern aus der Anlagefläche 41 herausgearbeitet wird. Auch andere Verfahren zur Herstellung einer derartigen Erhebung, Drahterosion oder dergleichen, sind dabei einsetzbar.

In Figur 2 ist das Führungselement 21 als durchgehender Stift ausgebildet, der eine durchgehend zylindrische Außenfläche aufweist. Es ist sehr wohl möglich, das einzige hier vorgegebene Führungselement 21 durch zwei in einem axialen Abstand zueinander angeordnete Teilstifte zu realisieren, oder aber die hier durchgehend dargestellte Außenfläche des Stifts in der Mitte mit einer Nut zu versehen, dass zwei in einem axialen Abstand zueinander angeordnete Führungsbereiche gebildet werden, die vorzugsweise so angeordnet sind, dass sie nahe der seitlichen Seitenfläche der Schneideinrichtung 13 angeordnet sind.

An die Anlagefläche 41 schließt sich eine Seitenfläche 45 an, welche eine Aussparung 47 begrenzt, in welche die Schneideinrichtung 13 im Grundkörper 9 des Werkzeugs 1 einsetzbar ist. In der Seitenfläche 45 ist eine Ausnehmung mit einem Stellkeil 49 zu erkennen, der Teil einer Justiereinrichtung ist, auf die unten näher eingegangen wird.

Die Spanneinrichtung 17 weist eine bekannte Spannpratze 51 auf, die mit einer Spannlippe 53 auf der Oberseite 35 der Messerplatte 25 eingreift, vorzugsweise in eine Spann-Nut 37, wie sie bei dem hier dargestellten Ausführungsbeispiel der Messerplatte 25 vorgesehen ist.

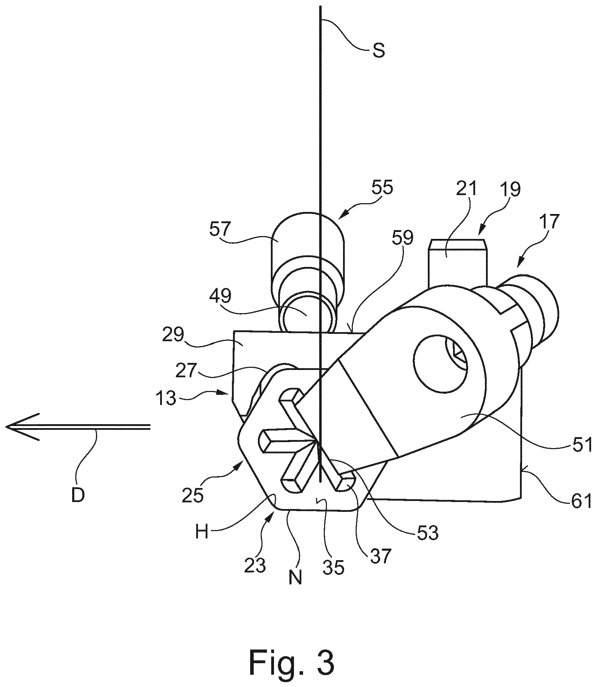

Figur 3 zeigt eine erste Prinzipskizze zur Verdeutlichung des Zusammenspiels von Elementen des Werkzeugs 1, nämlich der Schneideinrichtung 13 mit der Führungseinrichtung 19 und der Spannvorrichtung 17. Gleiche und funktionsgleiche Teile sind mit identischen Bezugsziffern versehen, sodass insofern auf die Beschreibung zu den vorangegangenen Figuren verwiesen wird.

Figur 3 zeigt, wie im eingebauten Zustand der Schneideinrichtung 13 die Spannlippe 53 der Spannpratze 51 der Spannvorrichtung 17 in eine Spann-Nut 37 in der Oberseite 35 der Messerplatte 25 der Schneideinrichtung 13 eingreift, wobei die Messerplatte 25 in einer Ausnehmung 27 der Aufnahme 29 angeordnet ist.

Figur 3 zeigt den Stellkeil 49 der Justiereinrichtung 55, die hier vorzugsweise so ausgebildet ist, dass der Stellkeil 49 mit einer Justierschraube 57 zusammenwirkt, die hier lediglich angedeutet ist und gemeinsam mit dem Stellkeil 49 in einer entsprechenden Bohrung im Grundkörper 9 des Werkzeugs 1 mittels eines Gewindeantriebs verlagerbar ist. Figur 3 zeigt, dass die Mittelachse sowohl des Stellkeils 49 als auch der Stellschraube 57 unter einem Winkel in die Bildebene von Figur 3 hinein verläuft. Der Stellkeil 49 greift an einer Seitenfläche 59 der Schneideinrichtung 13, hier an einer Seitenfläche der Aufnahme 29 an. Bei einem Vorschub des Stellkeils 49 wird die Schneideinrichtung 13 gemäß der Ansicht von Figur 3 nach unten verlagert, wobei diese Bewegung einer radialen Auswärtsbewegung gegenüber dem Grundkörper 9 des Werkzeugs 1 entspricht, also radial zu der Mittelachse 7 des Grundkörpers 9.

Von der Führungseinrichtung 19 ist hier das Führungselement 21 zu erkennen, welches bei dem hier dargestellten Ausführungsbeispiel als Stift realisiert ist.

Figur 3 lässt erkennen, dass die von dem Stellkeil 49 auf die Schneideinrichtung 13 ausgeübten Kräfte so auf die Messerplatte 25 wirken, dass die über die geometrisch bestimmte Schneide 23 in die Messerplatte 25 und in die Aufnahme 29, also in die Schneideinrichtung 13, eingeleiteten Kräfte sehr gut abgefangen werden.

Die Justiereinrichtung 55 und die Führungseinrichtung 19 liegen hier in einem - in Figur 3 in horizontaler Richtung gemessenen - Abstand. Dabei wirkt die Justiereinrichtung 55 möglichst in einem Bereich unterhalb beziehungsweise gegenüber der geometrisch bestimmten Schneide 23. Die Führungseinrichtung 19 ist näher am rechten Ende 61 der Schneideinrichtung 13, also am rechten Ende der Aufnahme 29 angeordnet, um eine optimale Führung der Schneideinrichtung 13 an dem hier nicht dargestellten Grundkörper 9 des Werkzeugs 1 zu gewährleisten, während die Schneideinrichtung 13 gegenüber der Mittelachse 7 radial nach außen, das heißt in Figur 3 nach unten verlagert wird, wenn die Justiereinrichtung 19 zur Einstellung des Bearbeitungsdurchmessers die Schneide 23 radial nach außen verlagert.

Die in Figur 3 gekennzeichnete Schneide 23 stellt die sogenannte aktive Schneide der Messerplatte 25 dar, die bei der hier wiedergegebenen Einbaulage der Messerplatte 25 bei Einsatz des Werkzeugs 1 mit der Oberfläche einer Bohrung eines Werkstücks in Eingriff tritt. Bei einem Verschleiß dieser Schneide kann die Messerplatte 25 um eine senkrecht auf deren Oberseite 35 stehenden Achse verdreht werden, nachdem sie aus der Ausnehmung 27 der Aufnahme 29 herausgenommen wurde. Damit kommt eine an die Schneide 23 rechts und links angrenzende weitere Schneide der Messerplatte 25 mit dem zu bearbeitenden Werkstück in Eingriff und stellt dann die aktive Schneide der Messerplatte 25 dar.

Die in Figur 3 gewählte Draufsicht auf die Messerplatte 25 zeigt, dass die Spann-Nut 37, in welche die Spannlippe 53 der Spannpratze 51 der Justiereinrichtung 55 eingreift, gegenüber einer gedachten senkrechten Linie S einen Winkel einschließt. Dies führt dazu, dass die von der Spannpratze 51 ausgeübten Kräfte aufgeteilt werden, nämlich in eine erste Kraftkomponente, die - bei der Darstellung gemäß Figur 3 - horizontal verläuft und die Schneideinrichtung 13 gegen das als Stift ausgebildete Führungselement 21 drückt. Eine weitere Kraftkomponente der Spannpratze 51 wirkt - bei der Darstellung gemäß Figur 3 - senkrecht nach oben, sodass die Schneideinrichtung 13 mit ihrer Seitenfläche 59, hier also mit der Seitenfläche der Aufnahme 29, gegen den Stellkeil 49 gedrückt wird.

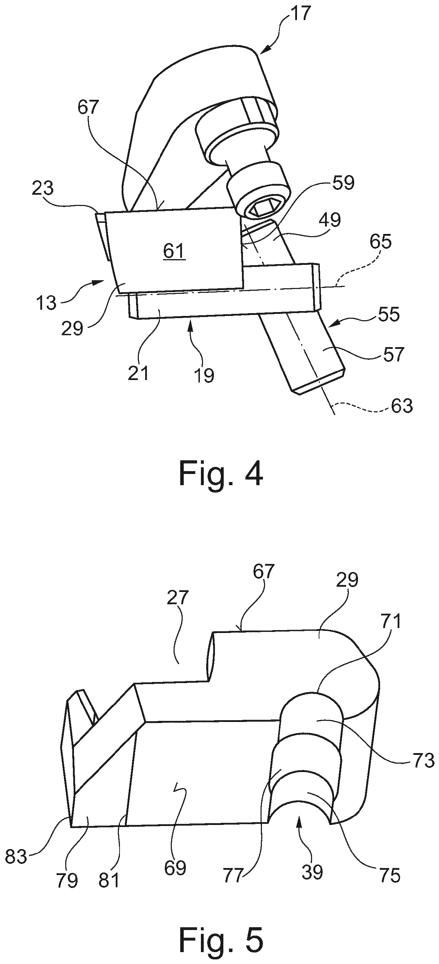

Figur 4 zeigt in einer zweiten Prinzipskizze zur Verdeutlichung des Zusammenspiels von Elementen des Werkzeugs 1 die bereits in Figur 3 dargestellten Elemente, allerdings ist die Schneideinrichtung 13 mit den Elementen so angeordnet, dass Figur 4 das rechte Ende 61 in Draufsicht wiedergibt. Gleiche und funktionsgleiche Teile sind mit identischen Bezugsziffern versehen, sodass insofern auf die Beschreibung zu den vorangegangenen Figuren verwiesen wird.

Deutlich wird hier, dass die Schneideinrichtung 13 eine aktive Schneide 23 aufweist, die über die linke Außenfläche der Schneideinrichtung 13 beziehungsweise ihrer Aufnahme 29 vorsteht und damit in Eingriff mit der Oberfläche einer zu bearbeitenden Bohrung treten kann.

Erkennbar ist hier auch das Führungselement 21 der Führungseinrichtung 19. Die Darstellung gemäß Figur 4 zeigt, dass der Stellkeil 49 - bezogen auf die Höhe - etwa mittig an der Seitenfläche 59 der Schneideinrichtung 13 beziehungsweise ihrer Aufnahme 29 angreift. Dadurch wird sichergestellt, dass bei einer Justierung der Messerplatte 25 beziehungsweise der Schneideinrichtung 13 praktisch kein Kippmoment auftritt, durch das die Messerplatte 25 um eine senkrecht auf dem rechten Ende 61 stehende Achse verkippen würde. Figur 4 zeigt auch noch die Stellschraube 57 der Justiereinrichtung 55, außerdem die Spannvorrichtung 17.

Wird die Justiereinrichtung 55 aktiviert, so übt der Stellkeil 49 eine Druckkraft auf die Seitenfläche 59 aus, wobei die Mittelachse 63 der Justiereinrichtung 55 einen Winkel mit einer Ebene einschließt, in der die Seitenfläche 59 liegt. Dadurch ergibt sich eine Kraftkomponente, die senkrecht auf die Seitenfläche 59 und die Schneideinrichtung 13 gemäß der Darstellung in Figur 4 in horizontaler Richtung nach links drückt. Die Mittelachse 65 des hier als Stift ausgebildeten Führungselements 21 verläuft ebenfalls horizontal, also parallel zu dieser Kraftkomponente der Druckkraft des Stellteils 49. Die Schneideinrichtung 13 gleitet auf dem Führungselement 21 nach links und wird dadurch optimal geführt, wobei insbesondere ein Verkippen um eine senkrecht auf der Oberseite 67 der Schneideinrichtung 13 stehende Achse vermieden wird.

Figur 5 zeigt die Aufnahme 29, also einen Teil der Schneideinrichtung 13 in perspektivischer Ansicht von unten, sodass die Grundfläche 69 der Schneideinrichtung 13 beziehungsweise der Aufnahme 29 erkennbar wird. Gleiche und funktionsgleiche Teile sind mit identischen Bezugsziffern versehen, sodass insofern auf die Beschreibung zu den vorangegangenen Figuren verwiesen wird.

Deutlich wird hier auch, dass in die Oberseite 67 der Aufnahme 29 die Ausnehmung 27 eingebracht ist, welche die hier nicht dargestellte Messerplatte 25 aufnimmt.

In dieser Darstellung ist die Führungsaufnahme 39 der Führungseinrichtung 19 zu sehen, die hier als Nut 71 in der Grundfläche 69 ausgebildet ist. Die Nut 71 ist hier halbkreisförmig ausgebildet und weist zwei in einem Abstand zueinander liegende, als Führungsflächen 73 und 75 ausgebildete Führungsbereiche auf, die dadurch - in axialer Richtung der Nut 71 gesehen - voneinander getrennt sind, dass in die Nut 71 eine Vertiefung eingebracht ist, die den Grund der Nut 71 schneidet, sodass diese keine durchgehende Fläche, sondern die beiden in einem Abstand zueinander angeordnete Führungsflächen 73 und 75 umfasst.

Die Führungsflächen 73 und 75 erstrecken sich über einen Bereich der Breite der Schneideinrichtung 13 beziehungsweise der Grundfläche 69 und liegen vorzugsweise an den Enden der Nut 71, sodass sich in Längsrichtung der Nut 71 gesehen möglichst weit außen liegende Führungsflächen 73 und 75 ergeben, sodass die Schneideinrichtung 13 besonders gut gegen ein Verkippen bei einer radialen Einstellung der aktiven Schneide 23 gesichert ist.

Besonders bevorzugt weist die Schneideinrichtung 13 beziehungsweise hier deren Aufnahme 29 eine im Bereich der Grundfläche 69 vorgesehene Stützfläche 79 auf, die gegenüber der Grundfläche 69 einen Winkel einschließt und über einen Knick 81 in die Grundfläche 69 übergeht. Dabei fällt die Stützfläche 79 bei der in Figur 5 gewählten Darstellung von dem Knick 81 gegenüber der Grundfläche 69 ab, sodass das linke Ende 83 der Stützfläche 79 gegenüber der Grundfläche 69 zurückspringt.

Im Bereich der Grundfläche 69 werden damit im Bereich der Führungsaufnahme 39 zwei Abstützbereiche der Schneideinrichtung 13 realisiert: Sie stützt sich über die Führungsflächen 73 und 75 an dem hier nicht dargestellten Führungselement 21 ab. Im eingebauten Zustand stützt sich die Schneideinrichtung 13 über die Stützfläche 79 zusätzlich an der Anlagefläche 41 am Grundkörper 9 des Werkzeugs 1 ab, die in Figur 2 dargestellt ist. Damit ergeben sich insgesamt drei Stützflächen einer Drei-Punkt-Anlage der Schneideinrichtung 13 im Bereich ihrer Grundfläche 69.

Bei einem abgewandelten Ausführungsbeispiel der Schneideinrichtung 13 ist vorgesehen, dass die Stützfläche 79 im Bereich des Knicks 81 gegenüber der Grundfläche 69 so abgewinkelt ist, dass im verspannten Zustand der Schneideinrichtung 13 eine Drei-Punkt-Anlage folgendermaßen realisiert wird:
Die Schneideinrichtung 13 stützt sich im Bereich ihrer Führungsaufnahme 39 insbesondere mit den beiden Führungsflächen 73 und 75 an dem Führungselement 21 ab, außerdem liegt der Knick 81 auf der Anlagefläche 41 am Grundkörper 9 des Werkzeugs 1 auf, sodass der Knick 81 den dritten Punkt der Drei-Punkt-Anlage bildet. Die Stützfläche 79 ist derart gegenüber der Grundfläche 69 abgewinkelt, dass sie bei diesem Ausführungsbeispiel an der Anlagefläche 41 am Grundkörper 9 des Werkzeugs 1 nicht mehr aufliegt.

Eine weitere Drei-Punkt-Anlage ergibt sich aus Folgendem:

Die Schneideinrichtung 13 liegt mit ihrer Führungsaufnahme 39, insbesondere mit den beiden Führungsflächen 73 und 75 an dem hier nicht dargestellten Führungselement 21 an, welches nach den Erläuterungen zu den vorangegangen Figuren als Stift ausgebildet ist. Es ergeben sich also hier zwei Anlageflächen der Schneideinrichtung 13. Wird diese, wie aus Figur 3 ersichtlich, mittels der Spannpratze 51 der Spannvorrichtung 17 am hier nicht dargestellten Grundkörper 9 des Werkzeugs 1 festgespannt, so ergibt sich auch eine Anlage am Stellkeil 49. Damit wird auch bezüglich der Darstellung von Figur 3 eine Drei-Punkt-Anlage realisiert, sodass die Schneideinrichtung 13 sehr exakt am Grundkörper 9 des Werkzeugs 1 festgespannt ist.

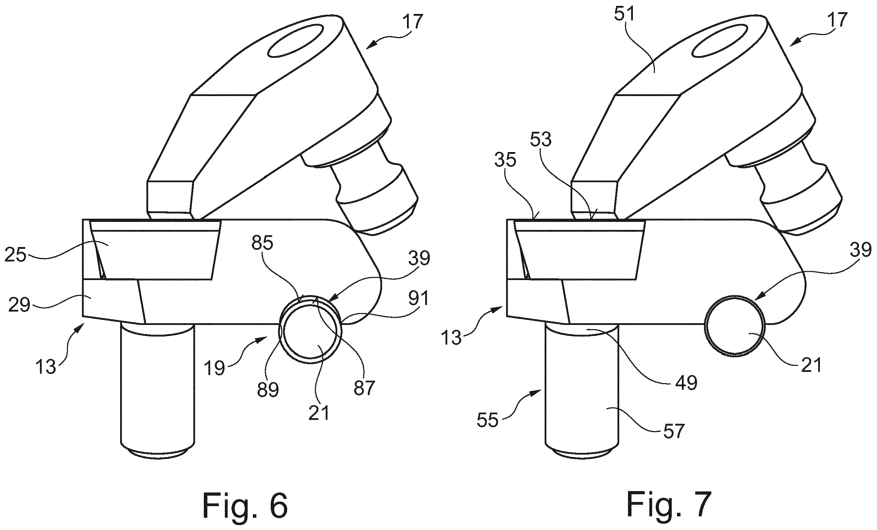

Figur 6 zeigt eine dritte Prinzipskizze zur Verdeutlichung des Zusammenspiels von Elementen des Werkzeugs 1, wobei die Schneideinrichtung 13 in unverspanntem Zustand wiedergegeben ist. Gleiche und funktionsgleiche Teile sind mit identischen Bezugsziffern versehen, sodass insofern auf die Beschreibung zu den vorangegangenen Figuren verwiesen wird.

Die Schneideinrichtung 13, die vorzugsweise die Aufnahme 29 und eine Messerplatte 25 umfasst, wird von der Spannvorrichtung 17 an dem hier nicht gezeigten Grundkörper 9 des Werkzeugs 1 festgespannt, wobei bei dieser Darstellung die Spannvorrichtung 17 noch nicht endgültig aktiviert wurde, sodass die Schneideinrichtung 13 noch nicht verspannt ist. Deutlich erkennbar ist hier die Führungseinrichtung 19 mit dem senkrecht in die Bildebene von Figur 6 hinein verlaufenden Führungselement 21 und mit der Führungsaufnahme 39.

Vorzugsweise ist vorgesehen, dass das Führungselement 21 eine über die in Figur 2 wiedergegebene Aufnahmefläche 41 vorstehende, bogenförmig, vorzugsweise kreisbogenförmig gewölbte Außenfläche 85 aufweist. Die Führungsaufnahme 39 weist eine bogenförmig, vorzugsweise kreisbogenförmig ausgebildete Innenfläche 87 auf.

Vorzugsweise ist vorgesehen, dass die Führungsaufnahme 39 kleiner ist als das Führungselement 21, das heißt, der Krümmungsradius der Innenfläche 87 ist kleiner als der Krümmungsradius der Außenfläche 85. Dadurch liegt die Führungsaufnahme 39 mit zwei Anlageflächen 89 und 91 an dem Führungselement an, wobei die Anlageflächen 89 und 91 mehr oder weniger linienförmig ausgebildet sind und senkrecht zur Bildebene von Figur 6 verlaufen, wobei die Anlageflächen bei dem in Figur 5 dargestellten Ausführungsbeispiel nicht durchgehend über die gesamte Länge der Nut 71 verlaufen, sondern lediglich im Bereich der Führungsflächen 73 und 75 realisiert sind.

Die Innenfläche 87 der Führungsaufnahme 39 kann auch durch ein Prisma oder dergleichen realisiert werden, insbesondere auch dadurch, dass die Nut 71 V-förmig ausgebildet und so groß ist, dass das Führungselement 21 an den V-förmig ausgerichteten Flächen einer derartigen Nut 71 mehr oder weniger linienförmig anliegt und dadurch Anlageflächen gebildet werden, die dann ebenfalls senkrecht zur Bildebene von Figur 6 verlaufen.

Grundsätzlich ist es darüber hinaus möglich, das Führungselement 21 auch als langgestrecktes polygonförmiges Element zu realisieren, sodass mit einer entsprechenden Innenfläche einer Führungsaufnahme 39 mehrere in einem Abstand zueinander liegende Anlageflächen gebildet werden.

Figur 7 zeigt schließlich eine vierte Prinzipskizze von Elementen des Werkzeugs 1, wobei hier die Schneideinrichtung 13 durch Aktivierung der Spannvorrichtung 17 im Grundkörper 9 des Werkzeugs 1 fest verspannt ist. Gleiche und funktionsgleiche Teile sind mit identischen Bezugsziffern versehen, sodass insofern auf die Beschreibung zu den vorangegangenen Figuren verwiesen wird.

Die Spannvorrichtung 17 übt über die Spannpratze 51 und über die Spannlippe 53 eine senkrecht auf die Oberseite der Schneideinrichtung 13, hier der Oberseite 35 der Messerplatte 25 wirkende Kraft aus, sodass die Schneideinrichtung 13 mit ihrer Grundfläche 69 gegen die in Figur 2 dargestellte Anlagefläche 41 gepresst wird. Dadurch wird die Innenfläche 87 der Führungsaufnahme 39 gegen die Außenfläche 85 des Führungselements 21 angepresst, sodass die Führungsflächen 73 und 75 der Nut 71 der Führungsaufnahme 39 an dem Führungselement 21 anliegen. Dabei reicht es, wenn auch in diesem Zustand eher linienförmige Berührungsbereiche realisiert werden. Es ergibt sich damit eine exakte Führung der Schneideinrichtung 13 senkrecht zur Bildebene von Figur 7 gesehen, wenn die Justiereinrichtung 55 aktiviert wird und der Stellkeil 49 durch Verdrehen der Stellschraube 57 von hinten auf die Spannvorrichtung 13, nämlich auf deren Seitenfläche 59 eine Druckkraft ausübt, sodass die Schneideinrichtung 13 senkrecht aus der Bildebene von Figur 7 herausgedrückt wird.

Aus den Erläuterungen zu den Figuren 1 bis 7 wird deutlich, dass bei dem hier dargestellten Werkzeug 1 die Führungseinrichtung 19 eine exakte Ausrichtung der Schneideinrichtung 13 gewährleistet, sodass diese bei einer Durchmessereinstellung des Werkzeugs 1 exakt entlang dem Führungselement 21 verschoben wird, welches radial, also senkrecht zur Mittelachse 7 des Werkzeugs 1 verläuft. Dadurch wird die geometrisch bestimmte Schneide 23 ohne irgendwelche Kippbewegungen, die in einer Schwenkbewegung der Schneideinrichtung 13 um eine senkrecht auf dieser stehenden Achse entsprechen würde. Dadurch bleibt eine einmal vorgegebene Verjüngung der geometrisch bestimmten Schneide 23 bei einer Durchmessereinstellung exakt erhalten.

Hierzu sei noch einmal auf Figur 3 verwiesen:
Die geometrisch bestimmte Schneide 23 weist zwei Bereiche auf, nämlich einen ersten Bereich, der bei einer durch einen Doppelpfeil D angedeuteten Vorschubbewegung des Werkzeugs 1 während der Bearbeitung einer Bohrung in einem Werkstück in Vorschubrichtung abfällt, und zwar in Richtung auf die Mittelachse 7 des Werkzeugs 1. Dieser erste Bereich wird als Hauptschneide H bezeichnet.

Die Schneide 23 weist einen sich an die Hauptschneide H anschließenden zweiten Bereich auf, der entgegen der durch den Doppelpfeil D angedeuteten Vorschubrichtung abfällt in Richtung auf die in Figur 3 nicht dargestellte Mittelachse 7 des Werkzeugs 1. Gegenüber einer gedachten Horizontalen schließt die Nebenschneide N einen Winkel ein, der sich - bei der Darstellung gemäß Figur 3 - nach rechts, also entgegen der Vorschubrichtung D öffnet. Üblicherweise wird hier ein Abfall 1 µm pro 1 mm realisiert. Demgegenüber schließt die Hauptschneide H mit dieser gedachten Horizontalen einen Winkel ein, der sich in Richtung der Vorschubrichtung D öffnet. Der Abfall der Nebenschneide N gegenüber der gedachten Horizontalen wird als Verjüngung bezeichnet. Die Definition von Haupt- und Nebenschneide sowie der Verjüngung ist grundsätzlich bekannt, sodass hier nicht näher darauf eingegangen wird.

Bei dem erfindungsgemäßen Werkzeug 1 ist die Verjüngung dadurch definiert, wie die Messerplatte 25 in der Aufnahme 29 drehfest in einer definierten Drehposition angeordnet ist. Es ist also sehr wohl möglich, die Ausnehmung 27, die im Wesentlichen eine Innenkontur aufweist, die der Außenkontur der Messerplatte 25 entspricht, so auszubilden, dass die Messerplatte 25 auch in einer anderen Position, als sie in Figur 3 dargestellt ist, angeordnet ist, sodass die Nebenschneide N unter einem anderen Winkel gegenüber der gedachten Horizontalen abfällt.

Da die Schneideinrichtung 13, also die Aufnahme 29 bei einer von der Justiereinrichtung 55 aufgebrachten Einstellkraft aufgrund der exakten Führung durch die Führungseinrichtung 19 keinerlei Kippbewegung durchführt, bleibt eine einmal vorgegebene Verjüngung der Nebenschneide N der Schneide 23 auch bei Einstellung und Nachstellung des Bohrungsdurchmessers des Werkzeugs 1 erhalten.

Es zeigt sich hier, dass durch das Aufpressen der Führungsaufnahme 39 auf das Führungselement 21 jegliches Spiel im Bereich der Führungseinrichtung 19 beseitigt ist, sodass der Durchmesser ohne jegliches Verkippen einstellbar ist, wobei auch bei Belastung der Schneideinrichtung 13 während des Einsatzes des Werkzeugs 1 eine Verkippung sicher vermieden wird.

Sollte eine Messerplatte 25 in all ihren Eckbereichen verschlissen sein, kann sie ohne Weiteres ausgetauscht werden. Wenn eine neue identische Messerplatte 25 in die Aufnahme 29 eingesetzt wird, bleibt die einmal vorgegebene Verjüngung stets erhalten.

Dabei ist es auch möglich, verschiedene Aufnahmen mit unterschiedlich orientierten Ausnehmungen zu verwenden, in die identische Messerplatten eingesetzt werden. Durch die verschiedene Orientierung der Ausnehmung können für jede Aufnahme verschiedene Verjüngungen vorgegeben werden.

Die hier erläuterte Schneideinrichtung 13 zeichnet sich noch dadurch aus, dass bei einem Verschleiß einer Schneide 23 nicht die gesamte Schneideinrichtung 13 ausgetauscht werden muss, sondern lediglich ein Teil davon, nämlich die in eine Ausnehmung 27 der Aufnahme 29 eingesetzte Messerplatte 25.

Sollte bei einem Bruch der Messerplatte 25 die Aufnahme 29 beschädigt werden, so bleibt in der Regel der Grundkörper 9 des Werkzeugs 1 unversehrt, sodass in diesem Fall es lediglich des Austausches der Messerplatte 25 und der Aufnahme 29 bedarf, um das Werkzeug 1 wieder einsetzen zu können.

Ein wesentlicher Gesichtspunkt bei dem Werkzeug 1, das hier anhand der Figuren 1 bis 7 erläutert wurde ist, dass die Führungseinrichtung 19 lediglich ein einziges Führungselement 21 und eine einzige mit diesem zusammenwirkende Führungsaufnahme 39 umfasst. Dies ermöglicht eine einfache und kostengünstige Realisierung der Führungseinrichtung 19, wobei gleichzeitig gewährleistet ist, dass eine exakte Führung der Schneideinrichtung 13 sichergestellt ist. Besonders vorteilhaft ist es, wenn, wie hier beschrieben, mindestens zwei Drei-Punkt-Anlagen realisiert werden, eine im Bereich der Grundfläche 69 der Schneideinrichtung 13 und eine einerseits im Bereich der Grundfläche 69, nämlich durch die Führungsflächen 37 und 35 und außerdem im Bereich der Anlagefläche des Stellteils 49 an der Seitenfläche 59 der Spanneinrichtung 13.

In der hier vorliegenden Beschreibung wird mehrfach von Drei-Punkt-Anlagen gesprochen. Damit wird ausgesagt, dass sich im Bereich dieser Drei-Punkt-Anlagen eine Abstützung der Schneideinrichtung 13 ergibt und zwar in den oben erwähnten Bereichen. Die Abstützung kann, beispielsweise im Bereich der Führungsflächen 73 und 75 auch dabei linienförmig sein. Dies gilt auch für das Ausführungsbeispiel, bei dem sich die Schneideinrichtung 13 über die Stützfläche 79 an der Anlagefläche 41 des Grundkörpers 9 abstützt. Insbesondere gilt dies für den Fall, dass die Stützfläche 79 gegenüber der Grundfläche 69 soweit abgewinkelt ist, dass sich die Schneideinrichtung 13 lediglich im Bereich des Knicks 81 an der Anlagefläche 41 abstützt.

Voraussetzung zur Erreichung der hier beschriebenen Vorteile ist es also nicht, dass tatsächlich eine ideale Punktanlage realisiert wird.

## Patentansprüche

1. Werkzeug zur spanenden Bearbeitung von Bohrungen in Werkstücken, insbesondere Feinbearbeitungswerkzeug oder Reibahle, mit:
- einem eine Mittelachse (7) aufweisenden Grundkörper (9);
- mindestens einer mindestens eine geometrisch bestimmte Schneide (23) aufweisende Schneideinrichtung (13);
- einer Spanneinrichtung (17) mittels derer die Schneideinrichtung (13) am Grundkörper (9) des Werkzeugs (1) festspannbar ist;
- einer mit der Schneideinrichtung (13) zusammenwirkenden Justiereinrichtung (55) zur Einstellung des Bearbeitungsdurchmessers des Werkzeugs (1); und mit
- einer Führungseinrichtung (19), die ein langgestrecktes Führungselement (21) umfasst, welches mit einer langgestreckten Führungsaufnahme (39) derart zusammenwirkt, dass die Schneideinrichtung (13) bei einer Aktivierung der Justiereinrichtung (55) während einer Verlagerung senkrecht zur Mittelachse (7) gleitend führbar ist;
wobei das Führungselement (21) an der Schneideinrichtung und die Führungsaufnahme (39) am Grundkörper (9) des Werkzeugs (1) oder das Führungselement (21) am Grundkörper (9) des Werkzeugs (1) und die Führungsaufnahme (39) an der Schneideinrichtung (13) vorgesehen ist, wobei sich das Führungselement (21) und die Führungsaufnahme (39) senkrecht zur Mittelachse (7) des Grundkörpers (9) des Werkzeugs (1) erstrecken, wobei die Führungseinrichtung (19) ein einziges Führungselement (21) und/oder eine einzige Führungsaufnahme (39) aufweist, wobei das Führungselement (21) eine langgestreckte Erhebung und
die Führungsaufnahme (39) eine langgestreckte Vertiefung aufweisen und wobei die Schneideinrichtung (13) mindestens eine in einem Abstand zum Führungselement (21) oder zur Führungsaufnahme (39) angeordnete Stützfläche (79) aufweist,
**dadurch gekennzeichnet,**
**dass** das Führungselement (21) und/oder die Führungsaufnahme (39) zwei in einem Abstand zueinander angeordnete Führungsbereiche aufweist, wobei die Schneideinrichtung (13) eine Grundfläche (69) aufweist und sich über eine im Bereich der Grundfläche (69) realisierte Drei-Punkt-Anlage am Grundkörper (9) des Werkzeugs (1) abstützt.

2. Werkzeug nach Anspruch 1, **dadurch gekennzeichnet, dass** sich das Führungselement (21) und/oder die Führungsaufnahme (39) über einen Bereich der Breite, vorzugsweise über die gesamte Breite der Schneideinrichtung (13) und/oder einer Anlagefläche (41) des Grundkörpers (9) erstreckt, gegen welche die Schneideinrichtung (13) mittels der Spannvorrichtung (17) angepresst wird.

3. Werkzeug nach einem der vorangehenden Ansprüche 1 oder 2, **dadurch gekennzeichnet, dass** das Führungselement (21) einen in den Grundkörper (9) des Werkzeugs (1) oder in die Schneideinrichtung (13) eingesetzten Stift aufweist, dessen Längsachse sich senkrecht zur Mittelachse (7) des Grundkörpers (9) des Werkzeugs (1) erstreckt.

4. Werkzeug nach einem der vorangehenden Ansprüche, **dadurch gekennzeichnet, dass** die Führungsbereiche sich zumindest bis zum Rand der Schneideinrichtung (13) beziehungsweise der Anlagefläche (41) des Grundkörpers (9) des Werkzeugs (1) erstrecken.

5. Werkzeug nach einem der vorangehenden Ansprüche, **dadurch gekennzeichnet, dass** die Schneideinrichtung (13) eine Seitenfläche (59) aufweist, über welche die Justiereinrichtung (55) auf die Schneideinrichtung (13) wirkt, und dass eine Drei-Punkt-Anlage über zwei Führungsflächen (73,75) im Bereich der Grundfläche (69) der Schneideinrichtung (13) und über die an der Seitenfläche (59) der Schneideinrichtung (13) wirkende Justiereinrichtung (55) realisierbar ist.

6. Werkzeug nach Anspruch 1, **dadurch gekennzeichnet, dass** die Schneideinrichtung (13) eine die mindestens eine geometrisch bestimmte Schneide (23) aufweisende Messerplatte (25) und eine die mindestens eine Messerplatte (25) aufnehmende Aufnahme (29) aufweist.

7. Werkzeug nach Anspruch 6, **dadurch gekennzeichnet, dass** das Führungselement (21) oder die Führungsaufnahme (39) an einer Grundfläche (69) der Aufnahme (29) realisierbar ist.

8. Werkzeug nach Anspruch 6, **dadurch gekennzeichnet, dass** die Messerplatte (25) eine Unterseite (31), die auf einem Boden (33) einer Ausnehmung (27) in der Aufnahme (29) anliegt, und eine Oberseite (35) aufweist, die mit mindestens einen Spann-Nut (37) versehen ist.

9. Werkzeug nach Anspruch 8, **dadurch gekennzeichnet, dass** die Spanneinrichtung (17) eine Spannpratze (51) mit einer Spannlippe (53) aufweist, welche in die mindestens eine Spann-Nut (37) der Messerplatte (25) eingreift.

10. Werkzeug nach Anspruch 8, **dadurch gekennzeichnet, dass** die Spann-Nut (37) der Messerplatte (25) in Einbaulage unter einem Winkel zu einer gedachten Linie (S) verläuft, die senkrecht auf der Mittelachse (7) des Grundkörpers (9) des Werkzeugs (1) steht.

## Claims

1. A tool for machining holes in workpieces, in particular a fine machining tool or reamer, having
- a main body (9) having a center axis (7),
- at least one cutting device (13) having at least one geometrically determined cutting edge (23),
- a clamping device (17) by means of which the cutting device (13) can be securely clamped to the main body (9) of the tool (1),
- an adjusting device (55) which interacts with the cutting device (13) for adjusting the machining diameter of the tool (1), and having
- a guiding device (19), which comprises an elongated guiding element (21) which interacts with an elongated guiding receptacle (39) in such a way that the cutting device (13) can be guided in a sliding manner perpendicular to the center axis (7) during a displacement when the adjusting device (55) is activated,
wherein the guiding element (21) is provided on the cutting device and the guiding receptacle (39) is provided on the main body (9) of the tool (1) or the guiding element (21) is provided on the main body (9) of the tool (1) and the guiding receptacle (39) is provided on the cutting device (13), and wherein the guiding element (21) and the guiding receptacle (39) extend perpendicular to the center axis (7) of the main body (9) of the tool (1), wherein the guiding device (19) has a single guiding element (21) and/or a single guiding receptacle (39), wherein the guiding element (21) has an elongated elevation and the guiding receptacle (39) has an elongated recess and wherein cutting device (13) has at least one supporting surface (79) arranged at a distance from the guiding element (21) or from the guiding receptacle (39),
**characterized in that**
the guiding element (21) and/or the guiding receptacle (39) has two guiding regions which are arranged at a distance from one another, wherein the cutting device (13) has a base surface (69) and is supported by means of a three-point contact on the main body (9) of the tool (1) in the region of the base surface (69).

2. The tool according to claim 1, **characterized in that** the guiding element (21) and/or guiding receptacle (39) extends over a region of the width, preferably over the whole width, of the cutting device (13) and/or a contact surface (41) of the main body (9), against which the cutting device (13) is pressed by means of the clamping device (17).

3. The tool according to one of preceding claims 1 or 2, **characterized in that** the guiding element (21) comprises a pin inserted into the main body (9) of the tool (1) or into the cutting device (13), the longitudinal axis of which extends perpendicular to the center axis (7) of the main body (9) of the tool (1).

4. The tool according to one of the preceding claims, **characterized in that** the guiding regions extend at least to the edge of the cutting device (13) or the contact surface (41) of the main body (9) of the tool (1).

5. The tool according to one of the preceding claims, **characterized in that** the cutting device (13) has a side surface (59), by means of which the adjusting device (55) acts on the cutting device (13), and that a three-point contact can be realized by means of two contact surfaces (73, 75) in the region of the base surface (69) of the cutting device (13) and by means of the adjusting device (55) which acts on the side surface (59) of the cutting device (13).

6. The tool according to claim 1, **characterized in that** the cutting device (13) has a cutter plate (25) which incorporates the at least one geometrically determined cutting edge (23) and a receptacle (29) which accommodates the at least one cutter plate (25).

7. The tool according to claim 6, **characterized in that** the guiding element (21) or the guiding receptacle (39) can be realized on a base surface (69) of the receptacle (29).

8. The tool according to claim 6, **characterized in that** the cutter plate (25) has an underside (31) which rests on a base (33) of a recess (27) in the receptacle (29), and a top side (35) which is provided with at least one clamping slot (37).

9. The tool according to claim 8, **characterized in that** the clamping device (17) has a clamping claw (51) with a clamping lip (53) which engages in the at least one clamping slot (37) of the cutter plate (25).

10. The tool according to claim 8, **characterized in that**, in the installed position, the clamping slot (37) of the cutter plate (25) runs at an angle to an imaginary line (S) which is perpendicular to the center axis (7) of the main body (9) of the tool (1).

## Revendications

1. Outil pour l'usinage par enlèvement de copeaux d'alésages dans des pièces, en particulier outil d'usinage de précision ou alésoir, comportant :
- un corps de base (9) présentant un axe central (7) ;
- au moins un dispositif de coupe (13) présentant au moins une lame (23) définie géométriquement ;
- un dispositif de serrage (17) au moyen duquel le dispositif de coupe (13) peut être serré sur le corps de base (9) de l'outil (1) ;
- un dispositif de réglage (55) coopérant avec le dispositif de coupe (13) pour régler le diamètre d'usinage de l'outil (1) ; et comportant
- un dispositif de guidage (19) qui comprend un élément de guidage allongé (21) qui coopère avec un logement de guidage allongé (39) de telle sorte que, lorsque le dispositif de réglage (55) est activé, le dispositif de coupe (13) peut être guidé de manière coulissante pendant un déplacement perpendiculaire à l'axe central (7) ;
dans lequel l'élément de guidage (21) est prévu sur le dispositif de coupe et le logement de guidage (39) sur le corps de base (9) de l'outil (1) ou l'élément de guidage (21) est prévu sur le corps de base (9) de l'outil (1) et le logement de guidage (39) sur le dispositif de coupe (13), dans lequel l'élément de guidage (21) et le logement de guidage (39) s'étendent perpendiculairement à l'axe central (7) du corps de base (9) de l'outil (1), dans lequel le dispositif de guidage (19) présente un seul élément de guidage (21) et/ou un seul logement de guidage (39), dans lequel l'élément de guidage (21) présente une élévation allongée et le logement de guidage (39) une dépression allongée et dans lequel le dispositif de coupe (13) présente au moins une surface de support (79) disposée à distance de l'élément de guidage (21) ou du logement de guidage (39),
**caractérisé en ce**
**que** l'élément de guidage (21) et/ou le logement de guidage (39) présentent deux zones de guidage disposées à distance l'une de l'autre, le dispositif de coupe (13) présentant une surface de base (69) et s'appuyant sur le corps de base (9) de l'outil (1) par un appui à trois points réalisé dans la zone de la surface de base (69).

2. Outil selon la revendication 1, **caractérisé en ce que** l'élément de guidage (21) et/ou le logement de guidage (39) s'étendent sur une plage de largeur, de préférence sur toute la largeur du dispositif de coupe (13) et/ou d'une surface d'appui (41) du corps de base (9), contre laquelle le dispositif de coupe (13) est pressé au moyen du dispositif de serrage (17).

3. Outil selon l'une des revendications 1 ou 2 précédentes, **caractérisé en ce que** l'élément de guidage (21) présente une broche insérée dans le corps de base (9) de l'outil (1) ou dans le dispositif de coupe (13), dont l'axe longitudinal s'étend perpendiculairement à l'axe central (7) du corps de base (9) de l'outil (1).

4. Outil selon l'une des revendications précédentes, **caractérisé en ce que** les zones de guidage s'étendent au moins jusqu'au bord du dispositif de coupe (13) ou de la surface d'appui (41) du corps de base (9) de l'outil (1).

5. Outil selon l'une des revendications précédentes, **caractérisé en ce que** le dispositif de coupe (13) présente une surface latérale (59) par laquelle le dispositif de réglage (55) agit sur le dispositif de coupe (13), et qu'un appui à trois points peut être réalisé par deux surfaces de guidage (73, 75) dans la zone de la surface de base (69) du dispositif de coupe (13) et par le dispositif de réglage (55) agissant sur la surface latérale (59) du dispositif de coupe (13).

6. Outil selon la revendication 1, **caractérisé en ce que** le dispositif de coupe (13) présente une plaquette de coupe (25) présentant ladite au moins une lame (23) définie géométriquement et un logement (29) recevant ladite au moins une plaquette de coupe (25).

7. Outil selon la revendication 6, **caractérisé en ce que** l'élément de guidage (21) ou le logement de guidage (39) peut être réalisé sur une surface de base (69) du logement (29).

8. Outil selon la revendication 6, **caractérisé en ce que** la plaquette de coupe (25) présente une face inférieure (31) qui repose sur un fond (33) d'un évidement (27) dans le logement (29) et une face supérieure (35) qui est munie d'au moins une rainure de serrage (37).

9. Outil selon la revendication 8, **caractérisé en ce que** le dispositif de serrage (17) présente une griffe de serrage (51) avec une lèvre de serrage (53) qui s'engage dans ladite au moins une rainure de serrage (37) de la plaquette de coupe (25).

10. Outil selon la revendication 8, **caractérisé en ce que** la rainure de serrage (37) de la plaquette de coupe (25) s'étend en position de montage selon un angle par rapport à une ligne imaginaire (S) qui est perpendiculaire à l'axe central (7) du corps de base (9) de l'outil (1).
